# EUROPEAN PATENT SPECIFICATION

(11) **EP 2 674 844 B1**
(45) Date of publication and mention of the grant of the patent: **22.02.2017**
(21) Application number: 11865047.2
(22) Date of filing: 04.11.2011
(51) Int. Cl.: G06F 3/048, G09G 3/20

(54) **DISPLAY SCREEN MANAGEMENT METHOD AND DEVICE**
BILDSCHIRMVERWALTUNGSVERFAHREN UND VORRICHTUNG
PROCÉDÉ ET DISPOSITIF DE GESTION D'ÉCRAN D'AFFICHAGE

(30) Priority: 03.08.2011 CN 201110221236
(43) Date of publication of application: 18.12.2013
(73) Proprietor: ZTE Corporation, Shenzhen, Guangdong 518057 (CN)
(72) Inventor: LIU, Fengpeng, Shenzhen Guangdong 518057 (CN); SHE, Haibo, Shenzhen Guangdong 518057 (CN); LIU, Dongmei, Shenzhen Guangdong 518057 (CN); DONG, Lingling, Shenzhen Guangdong 518057 (CN); SUN, Qinli, Shenzhen Guangdong 518057 (CN); HUANG, Zongwei, Shenzhen Guangdong 518057 (CN)
(74) Representative: Awapatent AB
(86) International application number: PCT/CN2011/081812
(87) International publication number: WO 2012/151882

(56) References cited:
- CN-A- 1 959 802
- CN-A- 101 346 755
- CN-A- 101 777 312
- JP-A- 2006 035 254
- JP-A- 2007 286 170
- JP-A- 2010 197 631
- US-A- 4 550 221
- US-A1- 2005 156 949
- US-A1- 2008 049 051
- US-A1- 2010 103 198
- US-A1- 2010 103 198

## Description

### Technical Field

The present invention relates to the display technology in the electronic technology, and particularly, to a method and apparatus for managing a display screen.

### Background of the Related Art

With the continuous development of the computer technology, the communication technology and the Internet technology, there are more and more categories of electronic devices which can be used by users, such as a desk computer, a notebook computer, a mobile phone and an MP4, and so on. Almost all the electronic devices have display screens, and the user will touch the display screens of the electronic devices more or less during using these electronic devices; for example, during using the notebook computer, the user will touch the display screen of the notebook computer with hands when sharing contents in the computer with others; and particularly in the process of using a tablet computer or the mobile phone with a touch screen, the user touches the touch screen more frequently.

In the related art, whether there is a display screen with a touching function or without a touching function, surface materials of the display screens will be contaminated in varying degrees in the process of the user touching the display screens with hands; for example, when there are stains or sweat stains on fingers, the stains or fingerprints will be left on the display screen during touching.

After the display screen is contaminated in varying degrees, it will have negative influences on display effects, such as dimming of display brightness of contaminated areas and reduction of display contrast of contaminated areas, and so on; moreover, it even makes the user cannot distinguish the displayed contents clearly at the time of the worse contamination.

US 2010/0103198 A1 provides method and apparatus for correcting burn-in in a flat screen display. The method includes the steps of determining a maximum cumulative luminance of each pixel within the display based upon a usage of the pixel, providing a modulation map of the display from the maximum cumulative luminance of each pixel within the display, transforming the modulation map based upon the maximum cumulative luminance of groups of adjacent pixels to provide a modulation index for each pixel location of the map, comparing the modulation indexes with a set of threshold values and adjusting a luminosity of associated pixels of the display when the modulation index exceeds the threshold.

US 2008/0049051 A1 provides a method of controlling a picture quality of a flat panel display for automatically analyzing a shape, a size, and brightness of a display stain of indeterminate shape having an irregular pattern, and compensating brightness of the display stain of indeterminate shape on the basis of the analyzed result.

US 4,550,221 A provides a touch sensitive control device translating touch location into output signals. The device includes a substrate which supports first and second interleaved, closely spaced, nonoverlapping arrays of conductive plates. The plates are aligned in rows and columns so that edges of each plate of one array are proximate to but spaced from the edges of plates of the other array. The plates of each column of the first array are connected together and the plates of each row of the second array are connected together. An insulating layer overlies the first and second arrays so that when the outer surface of the insulating layer is touched, the capacitance of at least one of the columns of plates of the first array and the rows of plates of the second array underlying the insulating layer at the location being touched exhibits a change of capacitance with respect to ambient ground. The columns of the first array and the rows of the second array are periodically connected on a multiplexed basis to a capacitance measuring circuit. Based upon the measured capacitance of each column of the first array and row of the second array, the microcomputer produces output signals which represent the coordinates of the location being touched.

### Summary of the Invention

In view of this, the present invention provides a method and apparatus for managing a display screen, which is used to solve the technical problem of display effect reduction after the display screen is contaminated in varying degrees existing in the related art.

The features of the method, apparatus, and display screen according to the present invention are defined in the independent claims, and the preferable features according to the present invention are defined in the dependent claims.

### Brief Description of Drawings

FIG. 1 is a flow chart of a method for managing a display screen in embodiment one of the present invention.
FIG. 2 is a block diagram of an apparatus for managing a display screen in embodiment two of the present invention.
FIG. 3 is a block diagram of a display screen in embodiment three of the present invention.
FIG. 4 is a schematic diagram of a comparison relationship table between capacitance values and display effect damaged values in embodiment one, two or three of the present invention.
FIG. 5 is a schematic diagram of a comparison relationship table between display effect damaged values and contrasts in embodiment one, two or three of the present invention.
FIG. 6 is a schematic diagram of a comparison relationship table between display effect damaged values and brightnesses in embodiment one, two or three of the present invention.

### Preferred Embodiments of the Present Invention

The basic idea of the present invention is: detecting a first display effect damaged value of a first display area in at least two display areas; comparing the first display effect damaged value with a predetermined threshold value, and outputting a first comparison result; and, when the first display effect damaged value is larger than the threshold value, adjusting a display effect of the first display area to a first display effect based on the first display effect damaged value, thereby matching the first display effect with a second display effect of a second display area without stains.

In order to make those skilled in the art to which the present invention belongs understand the present invention more clearly, the technical scheme of the present invention will be described in detail through specific embodiments and in combination with the accompanying drawings below.

In the embodiments of the present invention, a display screen can be divided into a plurality of display areas, such as 10 display areas, 100 display areas or 1000 display areas. Generally speaking, the more the display areas are divided, the higher accuracy is and the better effects are when the display effects of the display screen are adjusted.

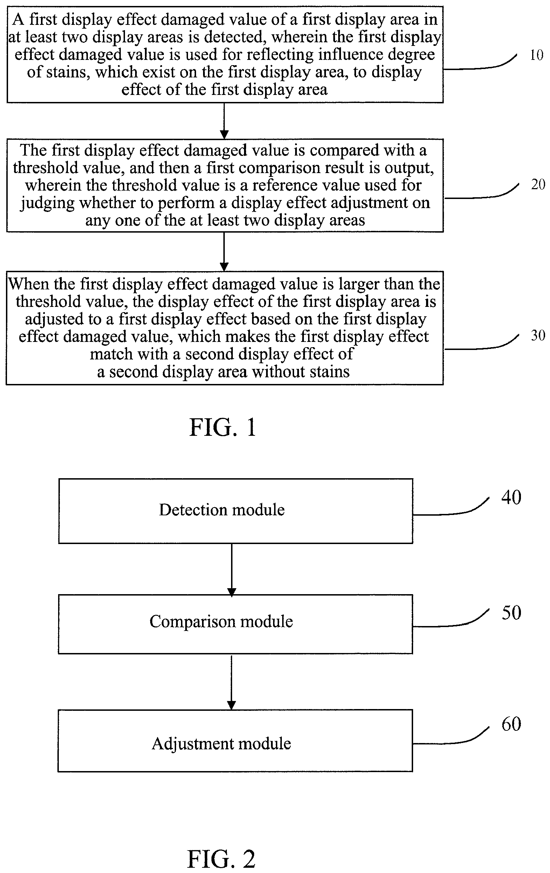

With reference to FIG. 1, FIG. 4, FIG. 5 and FIG. 6, a method for managing a display screen in embodiment one of the present invention includes the following steps.

In step 10, a first display effect damaged value of a first display area in at least two display areas is detected. The first display effect damaged value is used for reflecting influence degree of stains, which exist on the first display area, to display effect of the first display area.

In a specific implementation process, the display screen is a touch screen, the detecting the first display effect damaged value of the first display area in the at least two display areas specifically includes: detecting a first capacitance value of the first display area, and, based on the first capacitance value, determining the first display effect damaged value corresponding to the first capacitance value using a comparison relationship table between capacitance values and display effect damaged values,.

The detecting the first capacitance value of the first display area can be performed when a device in which the touch screen is located is powered on, for example, with regard to a mobile phone with the touch screen, the detection is performed when the mobile phone is started up; it also can be performed when the device in which the touch screen is located converts from an operating state with low power consumption to an operating state with high power consumption, for example, with regard to a tablet computer with the touch screen, the detection is performed when the tablet computer converts from a sleep state to a normal operating state; and it further can be performed at regular intervals in the process of the device in which the touch screen is located being in an operating state, for example, with regard to the mobile phone with the touch screen, the detection is performed once every other 60 seconds or 2 minutes in the process of the device being in the operating state.

In an example of the present invention, the touch screen includes 2 display areas, which are respectively a first display area and a second display area. In the method of the example of the present invention, a first capacitance value of the first display area and a second capacitance value of the second display area are detected respectively to obtain the first capacitance value of 6 and the second capacitance value of 0.

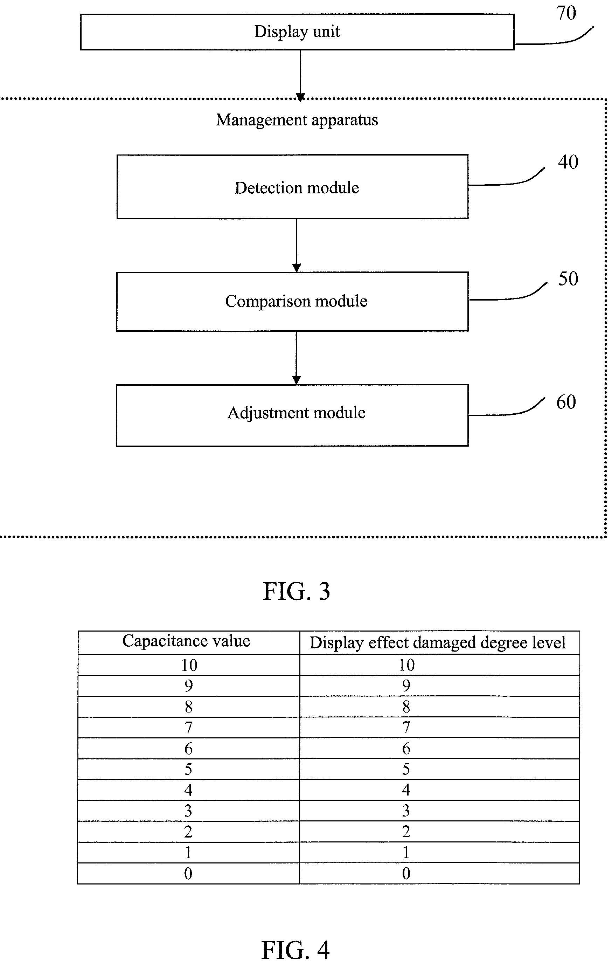

With regard to the first capacitance value, 6 represents that the first display area corresponding to the first capacitance value is contaminated, through a comparison relationship between capacitance values and display effect damaged values in FIG. 4, it can be known that a damaged degree corresponding to the first capacitance value of 6 is a 6-level, that is, a first display effect damaged value of the first display area is 6.

With regard to the second capacitance value, 0 represents that the second display area corresponding to the second capacitance value is not contaminated, through the comparison relationship between capacitance values and display effect damaged values in FIG. 4, it can be known that a damaged degree corresponding to the second capacitance value of 0 is a 0-level, that is, a second display effect damaged value of the second display area is 0.

In step 20, the first display effect damaged value is compared with a threshold value, and then a first comparison result is output, wherein the threshold value is a reference value used for judging whether to perform a display effect adjustment on any one of the at least two display areas.

In a specific implementation process, the threshold value is not fixed, a user can perform setting on the threshold value according to actual requirements, and the threshold value also can be performed setting in the process of producing the touch screen. When the threshold value is set, it is divided into two steps: collecting at least one parameter value used for determining the threshold value; and determining the threshold value based on the at least one parameter value. The parameter can be: (1) parameter corresponding to lens materials of the touch screen; or (2) parameter corresponding to performance of touch drive circuits or chips selected and used by the touch screen; or (3) parameter corresponding to an empirical value of actual fingerprint stains.

In this example, the threshold value is set as 2; the threshold value is higher, it is indicated that the contaminated degree of the touch screen is higher, and thus the display effect is adjusted. Certainly, in the practical using process, the skilled in the art also can set the threshold value as 1 or 5. Apparently, the display effect damaged value of the first display area is 6 and is larger than the threshold value of 2, which indicates that the display effect of the first display area is required to be adjusted; the display effect damaged value of the second display area is 0 and is less than the threshold value of 2, which indicates that the display effect of the second display area is well and is not required to be adjusted.

In step 30, when the first display effect damaged value is larger than the threshold value, the display effect of the first display area is adjusted to a first display effect based on the first display effect damaged value, which makes the first display effect match with a second display effect of the second display area without stains. The display effect can be contrast and also can be brightness. The user also can adjust other display effects such as saturation, grayscale, and so on, according to specific requirements. The specific process of adjusting the contrast and brightness will be described in detail below.

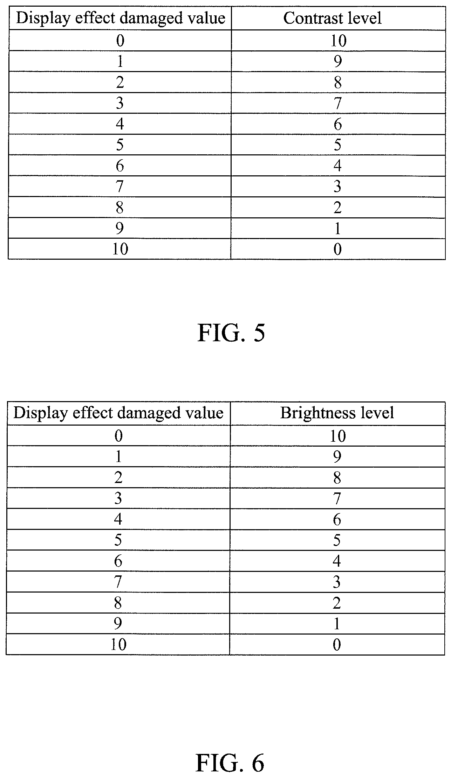

With reference to FIG. 5, the display effect is the contrast. Specifically, the first display effect damaged value of 6 is larger than the threshold value of 2, thus it is indicated that adjustment is required to be performed on the contrast of the first display area, then the first display effect damaged value of 6 is brought into a comparison relationship between display effect damaged values and contrasts, and it is discovered that, in order to adjust the display effect of the first display area to be identical with the display effect of the second display area, it is required to raise the contrast of the first display area from the current 4-level contrast by 6 levels to reach 10-level contrast.

With reference to FIG. 6, the display effect is the brightness. Specifically, the first display effect damaged value of 6 is larger than the threshold value of 2, thus it is indicated that adjustment is required to be performed on the brightness of the first display area, then the first display effect damaged value of 6 is brought into a comparison relationship between display effect damaged values and brightnesses, and it is discovered that, in order to adjust the display effect of the first display area to be identical with the display effect of the second display area, it is required to raise the brightness of the first display area from the current 4-level brightness by 6 levels to reach 10-level brightness.

With reference to FIG. 2, FIG. 4, FIG. 5 and FIG. 6, an apparatus for managing a display screen in the embodiment 2 of the present invention includes the following modules.

A detection module 40 is configured to detect a first display effect damaged value of a first display area in the at least two display areas. The first display effect damaged value is used for reflecting influence degree of stains, which exist on the first display area, to a display effect of the first display area.

In a specific implementation process, the detection module specifically includes: a capacitance value detection module, configured to detect a first capacitance value of the first display area; and a display effect damaged value determination module, configured to: based on the first capacitance value, determine the first display effect damaged value corresponding to the first capacitance value using a comparison relationship table between capacitance values and display effect damaged values.

The capacitance value detection module can perform detection when a device in which the touch screen is located is powered on, for example, with regard to a mobile phone with the touch screen, the detection is performed when the mobile phone is started up; it also can perform detection when the device in which the touch screen is located converts from an operating state with low power consumption to an operating state with high power consumption, for example, with regard to a tablet computer with the touch screen, the detection is performed when the tablet computer converts from a sleep state to a normal operating state; and it also can perform detection at regular intervals in the process of the device in which the touch screen is located being in an operating state, for example, with regard to the mobile phone with the touch screen, the detection is performed once every other 60 seconds or 2 minutes in the process of being in the operating state.

In an example of the present invention, the touch screen includes 2 display areas, which are respectively a first display area and a second display area. In the method of the example of the present invention, a first capacitance value of the first display area and a second capacitance value of the second display area are detected respectively to obtain the first capacitance value of 6 and the second capacitance value of 0.

With regard to the first capacitance value, 6 represents that the first display area corresponding to the first capacitance value is contaminated. Through a comparison relationship between capacitance values and display effect damaged values in FIG. 4, it can be known that a damaged degree corresponding to the first capacitance value of 6 is a 6-level, that is, a first display effect damaged value of the first display area is 6.

With regard to the second capacitance value, 0 represents that the second display area corresponding to the second capacitance value is not contaminated. Through a comparison relationship between capacitance values and display effect damaged values in FIG. 4, it can be known that a damaged degree corresponding to the second capacitance value of 0 is a 0-level, that is, a second display effect damaged value of the second display area is 0.

The apparatus also includes: a comparison module 50, which is configured to compare the first display effect damaged value with a threshold value and output a first comparison result; wherein, the threshold value is a reference value used for judging whether to perform a display effect adjustment on any one display area of the at least two display areas.

In a specific implementation process, the threshold value is not fixed, a user can perform setting according to actual requirements, and the threshold value also can be performed setting in the process of producing the touch screen. When the threshold value is set, it is divided into two steps: collecting at least one parameter value used for determining the threshold value; and determining the threshold value based on the at least one parameter value. The parameter can be: (1) parameter corresponding to lens materials of the touch screen; or (2) parameter corresponding to performance of touch drive circuits or chips selected and used by the touch screen; or (3) parameter corresponding to an empirical value of actual fingerprint stains obtained by collecting samples of the fingerprint stains on a large scale.

In this example, the threshold value is set as 2, the threshold value is larger, it is indicated that a contaminated degree of the touch screen is higher, and thus the display effects is adjusted. Certainly, in the practical using process, the skilled in the art also can set the threshold value as 1 or 5. Apparently, the display effect damaged value of the first display area is 6 and is larger than the threshold value 2, which indicates that the display effect of the first display area is required to be adjusted; the display effect damaged value of the second display area is 0 and is less than the threshold value 2, which indicates that the display effect of the second display area is well and is not required to be adjusted.

The apparatus also includes an adjustment module 60, which is configured to: when the first display effect damaged value is larger than the threshold value, adjust the display effect of the first display area to a first display effect based on the first display effect damaged value, to make the first display effect match with a second display effect of the second display area without stains. The display effect can be contrast and also can be brightness. The user also can adjust other display effects such as saturation, grayscale, and so on, according to specific requirements. The specific process of adjusting the contrast and brightness will be described in detail below.

With reference to FIG. 5, the display effect is the contrast. Specifically, the first display effect damaged value of 6 is larger than the threshold value of 2, thus it is indicated that adjustment is required to be performed on the contrast of the first display area; at this time, the adjustment module brings the first display effect damaged value of 6 into a comparison relationship between display effect damaged values and contrasts, and raises the contrast of the first display area from the current 4-level contrast by 6 levels to reach 10-level contrast, so as to adjust the display effect of the first display area to be identical with the display effect of the second display area.

With reference to FIG. 6, the display effect is the brightness. Specifically, the first display effect damaged value of 6 is larger than the threshold value of 2, thus it is indicated that adjustment is required to be performed on the brightness of the first display area; at this time, the adjustment module brings the first display effect damaged value of 6 into a comparison relationship between display effect damaged values and brightnesses, and raises the brightness of the first display area from the current 4-level brightness by 6 levels to reach 10-level brightness, so as to adjust the display effect of the first display area to be identical with the display effect of the second display area.

With reference to FIG. 3, FIG. 4, FIG. 5 and FIG. 6, a display screen in the embodiment three of the present invention includes:
a display unit 70, configured to display display data transmitted to the display screen, wherein the display unit includes at least two display areas; and
a management apparatus, connected with the display unit, wherein, the management apparatus includes:
   a detection module 40, configured to detect a first display effect damaged value of a first display area in the at least two display areas; wherein, the first display effect damaged value is used for reflecting influence degree of stains, which exist on the first display area, to a display effect of the first display area;
   a comparison module 50, configured to compare the first display effect damaged value and a threshold value and output a first comparison result, wherein, the threshold value is a reference value used for judging whether to perform display effect adjustment on any one display area of the at least two display areas; and
   an adjustment module 60, configured to, when the first display effect damaged value is larger than the threshold value, adjust the display effect of the first display area to a first display effect based on the first display effect damaged value, to make the first display effect match with a second display effect of a second display area without stains.

In a specific implementation process, the entire implementation process of the management apparatus is the same as that of the apparatus for managing the display screen in the above embodiment two; the skilled in the art to which the present invention belongs can understand the display screen in the embodiment three clearly and completely based on the technical scheme in the above embodiment two, and can perform implementation in the premise of not contributing creative work. Therefore, the management apparatus in the embodiment three will not be described in details here.

Through one or more examples in the embodiment 1, 2 or 3, the following technical effects can be implemented.
1. By detecting the display effect damaged value of the display screen and using the display effect damaged value to decide whether it is required to perform adjustment on display effect of the display screen, adjustment is performed on the display effect of the display screen when it is required to perform adjustment, thereby guaranteeing the display effect of the display screen and making the user experience of users enhance greatly.
2. When the display effect damaged value of the display screen is detected, the detection will be performed according to user's requirements, for example, the detection is performed when a device in which the display screen is located is powered on, thereby enabling the user to control the detecting opportunity.
3. With respect to the adjustment on the display effect of the display screen, the contrast can be adjusted alone, the brightness also can be adjusted alone, and the contrast and brightness can be also adjusted simultaneously, it can be fully guaranteed that the display effect after the adjustment can meet the requirements of users.

Though the preferred embodiments of the present invention have been described, other changes and modifications can be made on these embodiments once those skilled in the art acquire the basic creative concepts. Therefore, the appended claims are intended to be interpreted as comprising the preferred embodiments and all the changes and modifications falling into the scope of the present invention.

Apparently, those skilled in the art can make various modifications and variations for the present invention. Therefore, if these modifications and variations of the present invention belong to the scope of the claims of the present invention and equivalent techniques thereof, then the present invention also intends to include these modifications and variations.

## Claims

1. A method for managing a display screen which comprises at least two display areas, comprising:
detecting a first display effect damaged value of a first display area with stains on the surface in the at least two display areas (10), the first display effect damaged value indicating the influence degree of stains on the surface of the first display area to the display effect of the first display area;
comparing the first display effect damaged value with a predetermined threshold value, and outputting a first comparison result (20), wherein the threshold value is used for judging whether to perform a display effect adjustment on any one of the at least two display areas; and
adjusting, based on the detected first display effect damaged value, the display effect of the first display area with stains to match the display effect of the first display area with a corresponding display effect of a second display area in the at least two display areas (30) without stains on the surface, when the first display effect damaged value is larger than the threshold value;
the method being **characterized in that** the display screen is a touch screen and the step of detecting the first display effect damaged value of the first display area with stains on the surface comprises:
detecting a first capacitance value of the first display area in the at least two display areas and using a comparison relationship table between capacitance values and display effect damaged values to determine the first display effect damaged value corresponding to the detected first capacitance value.

2. The method according to claim 1, wherein, the threshold value is determined through following steps:
collecting at least one parameter value used for determining the threshold value; and
determining the threshold value based on the at least one parameter value;
wherein, the parameter comprises: parameter corresponding to lens materials of the touch screen; or parameter corresponding to performance of touch drive circuits or chips selected and used by the touch screen; or parameter corresponding to an empirical value of actual fingerprint stains obtained by collecting samples of the fingerprint stains on a large scale.

3. The method according to claim 2, wherein, the step of detecting the first display effect damaged value of the first display area with stains in the at least two display areas comprises:
when a device in which the display screen is located is powered on, detecting the first display effect damaged value of the first display area in the at least two display areas; or
when a device in which the display screen is located converts from an operating state with low power consumption to an operating state with high power consumption, detecting the first display effect damaged value of the first display area in the at least two display areas; or
in the process of a device in which the display screen is located being in an operating state, detecting the first display effect damaged value of the first display area in the at least two display areas at regular time periods.

4. The method according to claim 1, wherein, the display effect is contrast, and the step of adjusting a display effect of the first display area to match the display effect of the first display area with a corresponding display effect of a second display area without stains comprises:
adjusting a contrast of the first display area to a first contrast using a comparison relationship table between capacitance values and contrasts, to match the first contrast with a second contrast of the second display area without stains.

5. The method according to claim 1, wherein, the display effect is brightness, and the step of adjusting a display effect of the first display area to match the display effect of the first display area with a corresponding display effect of a second display area without stains comprises:
adjusting a brightness of the first display area to a first brightness using a comparison relationship table between capacitance values and brightnesses, to match the first brightness with a second brightness of the second display area without stains.

6. An apparatus for managing a display screen which comprises at least two display areas, comprising:
a detection module (40), configured to detect a first display effect damaged value of a first display area with stains on the surface in the at least two display areas, the first display effect damaged value indicating the influence degree of stains on the surface of the first display area to the display effect of the first display area;
a comparison module (50), configured to compare the first display effect damaged value with a predetermined threshold value, and output a first comparison result, wherein the threshold value is used for judging whether to perform a display effect adjustment on any one of the at least two display areas; and
an adjustment module (60), configured to adjust, based on the detected first display effect damaged value, the display effect of the first display area with stains to match the display effect of the first display area with a corresponding second display effect of a second display area in the at least two display areas (30) without stains on the surface, when the first display effect damaged value is larger than the threshold value;
**characterized in that**, the display screen is a touch screen and the detection module (40) comprises:
a capacitance detection module, configured to detect a first capacitance value of the first display area in the at least two display areas; and
a display effect damaged value determination module, configured to use a comparison relationship table between capacitance values and display effect damaged values to determine the first display effect damaged value corresponding to the detected first capacitance value.

7. The apparatus according to claim 6, further comprising:
a collection module, configured to collect at least one parameter value used for determining the threshold value; and
a threshold value determination module, configured to determine the threshold value based on the at least one parameter value;
wherein, the parameter comprises: parameter corresponding to lens materials of the touch screen; or parameter corresponding to performance of touch drive circuits or chips selected and used by the touch screen; or parameter corresponding to an empirical value of actual fingerprint stains obtained by collecting samples of the fingerprint stains on a large scale.

8. The apparatus according to claim 7, wherein, the detection module (40) is configured to detect the first display effect damaged value of the first display area in the at least two display areas when following conditions are met, and the conditions are:
a device in which the display screen is located being powered on; or
a device in which the display screen is located converting from an operating state low power consumption to an operating state with high power consumption; or
in the process of a device in which the display screen is located being in an operating state, and an expiration of a regular time period.

9. The apparatus according to claim 6, wherein, the display effect is contrast, and the adjustment module (60) is configured to adjust the display effect of the first display area to match the first display effect of the first display area with a corresponding display effect of the second display area without stains in the following way:
the adjustment module (60) using a comparison relationship table between capacitance values and contrasts, adjusting a contrast of the first display area to a first contrast, wherein the first contrast matches with a second contrast of the second display area without stains.

10. The apparatus according to claim 6, wherein, the display effect is brightness, and the adjustment module is configured to adjust the display effect of the first display area to match the first display effect of the first display area with a corresponding display effect of the second display area without stains in the following way:
the adjustment module (60) using a comparison relationship table between capacitance values and brightnesses, adjusting a brightness of the first display area to a first brightness, wherein the first brightness matches with a second brightness of the second display area without stains.

11. A display screen, comprising:
a display unit (70), configured to display display data transmitted to the display screen, wherein the display unit (70) comprises at least two display areas; and
a management apparatus according to claim 6 connected with the display unit (70).

## Patentansprüche

1. Verfahren zum Verwalten eines Anzeigeschirms, der mindestens zwei Anzeigebereiche umfasst, wobei das Verfahren Folgendes umfasst:
Detektieren eines ersten Anzeigeeffekt-beschädigt-Wertes eines ersten Anzeigebereichs mit Flecken auf der Oberfläche in den mindestens zwei Anzeigebereichen (10), wobei der erste Anzeigeeffekt-beschädigt-Wert den Einflussgrad von Flecken auf der Oberfläche des ersten Anzeigebereichs auf den Anzeigeeffekt des ersten Anzeigebereichs angibt;
Vergleichen des ersten Anzeigeeffekt-beschädigt-Wertes mit einem zuvor festgelegten Schwellenwert und Ausgeben eines ersten Vergleichsresultats (20), wobei der Schwellenwert zum Beurteilen verwendet wird, ob eine Anzeigeeffektjustierung an einem der mindestens zwei Anzeigebereiche ausgeführt werden soll; und
Justieren, auf der Basis des detektierten ersten Anzeigeeffektbeschädigt-Wertes, des Anzeigeeffekts des ersten Anzeigebereichs mit Flecken dergestalt, dass der Anzeigeeffekt des ersten Anzeigebereichs mit einem entsprechenden Anzeigeeffekt eines zweiten Anzeigebereichs in den mindestens zwei Anzeigebereichen (30) ohne Flecken auf der Oberfläche übereinstimmt, wenn der erste Anzeigeeffekt-beschädigt-Wert größer ist als der Schwellenwert;
wobei das Verfahren **dadurch gekennzeichnet ist, dass** der Anzeigeschirm ein Berührungsbildschirm ist und der Schritt zum Detektieren des ersten Anzeigeeffekt-beschädigt-Wertes des ersten Anzeigebereichs mit Flecken auf der Oberfläche Folgendes umfasst:
Detektieren eines ersten Kapazitätswertes des ersten Anzeigebereichs in den mindestens zwei Anzeigebereichen und Verwenden einer Vergleichsbeziehungstabelle zwischen Kapazitätswerten und Anzeigeeffekt-beschädigt-Werten, um den ersten Anzeigeeffektbeschädigt-Wert zu bestimmen, der dem detektierten ersten Kapazitätswert entspricht.

2. Verfahren nach Anspruch 1, wobei der Schwellenwert durch folgende Schritte bestimmt wird:
Erfassen mindestens eines Parameterwertes, der zum Bestimmen des Schwellenwertes verwendet wird; und
Bestimmen des Schwellenwertes auf der Basis des mindestens einen Parameterwertes;
wobei der Parameter Folgendes umfasst: einen Parameter, der Linsenmaterialien des Berührungsbildschirms entspricht; oder einen Parameter, der der Leistung von Berührungsansteuerungskreisen oder -chips entspricht, die durch den Berührungsbildschirm ausgewählt und verwendet werden; oder einen Parameter, der einem empirischen Wert echter Fingerabdruckflecken entspricht, der durch Erfassen von Proben der Fingerabdruckflecken in großem Maßstab erhalten wurde.

3. Verfahren nach Anspruch 2, wobei der Schritt zum Detektieren des ersten Anzeigeeffekt-beschädigt-Wertes des ersten Anzeigebereichs mit Flecken in den mindestens zwei Anzeigebereichen Folgendes umfasst:
wenn eine Vorrichtung, in der sich der Anzeigeschirm befindet, eingeschaltet wird, Detektieren des ersten Anzeigeeffekt-beschädigt-Wertes des ersten Anzeigebereichs in den mindestens zwei Anzeigebereichen; oder,
wenn eine Vorrichtung, in der sich der Anzeigeschirm befindet, von einem Betriebszustand mit geringem Stromverbrauch zu einem Betriebszustand mit hohen Stromverbrauch wechselt, Detektieren des ersten Anzeigeeffekt-beschädigt-Wertes des ersten Anzeigebereichs in den mindestens zwei Anzeigebereichen; oder
in dem Prozess, wo eine Vorrichtung, in der sich der Anzeigeschirm befindet, in einem Betriebszustand ist, Detektieren des ersten Anzeigeeffekt-beschädigt-Wertes des ersten Anzeigebereichs in den mindestens zwei Anzeigebereichen in regelmäßigen Zeiträumen.

4. Verfahren nach Anspruch 1, wobei der Anzeigeeffekt der Kontrast ist, und der Schritt zum Justieren eines Anzeigeeffekts des ersten Anzeigebereichs dergestalt, dass der Anzeigeeffekt des ersten Anzeigebereichs mit einem entsprechenden Anzeigeeffekt eines zweiten Anzeigebereichs ohne Flecken übereinstimmt, Folgendes umfasst:
Justieren eines Kontrasts des ersten Anzeigebereichs zu einem ersten Kontrast unter Verwendung einer Vergleichsbeziehungstabelle zwischen Kapazitätswerten und Kontrasten dergestalt, dass der erste Kontrast mit einem zweiten Kontrast des zweiten Anzeigebereichs ohne Flecken übereinstimmt.

5. Verfahren nach Anspruch 1, wobei der Anzeigeeffekt die Helligkeit ist, und der Schritt zum Justieren eines Anzeigeeffekts des ersten Anzeigebereichs dergestalt, dass der Anzeigeeffekt des ersten Anzeigebereichs mit einem entsprechenden Anzeigeeffekt eines zweiten Anzeigebereichs ohne Flecken übereinstimmt, Folgendes umfasst:
Justieren einer Helligkeit des ersten Anzeigebereichs zu einer ersten Helligkeit unter Verwendung einer Vergleichsbeziehungstabelle zwischen Kapazitätswerten und Helligkeiten, um die erste Helligkeit mit einer zweiten Helligkeit des zweiten Anzeigebereichs ohne Flecken in Übereinstimmung zu bringen.

6. Vorrichtung zum Verwalten eines Anzeigeschirms, der mindestens zwei Anzeigebereiche umfasst, wobei die Vorrichtung Folgendes umfasst:
ein Detektionsmodul (40), das dafür konfiguriert ist, einen ersten Anzeigeeffekt-beschädigt-Wert eines ersten Anzeigebereichs mit Flecken auf der Oberfläche in den mindestens zwei Anzeigebereichen zu detektieren, wobei der erste Anzeigeeffekt-beschädigt-Wert den Einflussgrad von Flecken auf der Oberfläche des ersten Anzeigebereichs auf den Anzeigeeffekt des ersten Anzeigebereichs angibt;
ein Vergleichsmodul (50), das dafür konfiguriert ist, den ersten Anzeigeeffekt-beschädigt-Wert mit einem zuvor festgelegten Schwellenwert zu vergleichen und ein erstes Vergleichsresultat auszugeben, wobei der Schwellenwert zum Beurteilen verwendet wird, ob eine Anzeigeeffektjustierung an einem der mindestens zwei Anzeigebereiche ausgeführt werden soll; und
ein Justierungsmodul (60), das dafür konfiguriert ist, auf der Basis des detektierten ersten Anzeigeeffekt-beschädigt-Wertes den Anzeigeeffekt des ersten Anzeigebereichs mit Flecken dergestalt zu justieren, dass der Anzeigeeffekt des ersten Anzeigebereichs mit einem entsprechenden Anzeigeeffekt eines zweiten Anzeigebereichs in den mindestens zwei Anzeigebereichen (30) ohne Flecken auf der Oberfläche übereinstimmt, wenn der erste Anzeigeeffekt-beschädigt-Wert größer ist als der Schwellenwert;
**dadurch gekennzeichnet, dass** der Anzeigeschirm ein Berührungsbildschirm ist und das Detektionsmodul (40) Folgendes umfasst:
ein Kapazitätsdetektionsmodul, das dafür konfiguriert ist, einen ersten Kapazitätswert des ersten Anzeigebereichs in den mindestens zwei Anzeigebereichen zu detektieren; und
ein Anzeigeeffekt-beschädigt-Wert-Bestimmungsmodul, das dafür konfiguriert ist, eine Vergleichsbeziehungstabelle zwischen Kapazitätswerten und Anzeigeeffekt-beschädigt-Werten zu verwenden, um den ersten Anzeigeeffekt-beschädigt-Wert zu bestimmen, der dem detektierten ersten Kapazitätswert entspricht

7. Vorrichtung nach Anspruch 6, die des Weiteren Folgendes umfasst:
ein Erfassungsmodul, das dafür konfiguriert ist, mindestens einen Parameterwert zu erfassen, der zum Bestimmen des Schwellenwertes verwendet wird; und
ein Schwellenwert-Bestimmungsmodul, das dafür konfiguriert ist, den Schwellenwert auf der Basis des mindestens einen Parameterwertes zu bestimmen;
wobei der Parameter Folgendes umfasst: einen Parameter, der Linsenmaterialien des Berührungsbildschirms entspricht; oder einen Parameter, der der Leistung von Berührungsansteuerungskreisen oder -chips entspricht, die durch den Berührungsbildschirm ausgewählt und verwendet werden; oder einen Parameter, der einem empirischen Wert echter Fingerabdruckflecken entspricht, der durch Erfassen von Proben der Fingerabdruckflecken in großem Maßstab erhalten wurde.

8. Vorrichtung nach Anspruch 7, wobei das Detektionsmodul (40) dafür konfiguriert ist, den ersten Anzeigeeffekt-beschädigt-Wert des ersten Anzeigebereichs in den mindestens zwei Anzeigebereichen zu detektieren, wenn folgende Bedingungen erfüllt sind, und die Bedingungen folgende sind:
eine Vorrichtung, in der sich der Anzeigeschirm befindet, ist eingeschaltet; oder
eine Vorrichtung, in der sich der Anzeigeschirm befindet, wechselt von einem Betriebszustand mit geringem Stromverbrauch zu einem Betriebszustand mit hohen Stromverbrauch; oder
der Prozess einer Vorrichtung, in der sich der Anzeigeschirm befindet, ist in einem Betriebszustand, und ein regelmäßiger Zeitraum läuft ab.

9. Vorrichtung nach Anspruch 6, wobei der Anzeigeeffekt der Kontrast ist, und das Justierungsmodul (60) dafür konfiguriert ist, den Anzeigeeffekt des ersten Anzeigebereichs so zu justieren, dass der Anzeigeeffekt des ersten Anzeigebereichs mit einem entsprechenden Anzeigeeffekt des zweiten Anzeigebereichs ohne Flecken übereinstimmt, und zwar folgendermaßen:
das Justierungsmodul (60) verwendet eine Vergleichsbeziehungstabelle zwischen Kapazitätswerten und Kontrasten und justiert einen Kontrast des ersten Anzeigebereichs zu einem ersten Kontrast, wobei der erste Kontrast mit einem zweiten Kontrast des zweiten Anzeigebereichs ohne Flecken übereinstimmt.

10. Vorrichtung nach Anspruch 6, wobei der Anzeigeeffekt die Helligkeit ist, und das Justierungsmodul dafür konfiguriert ist, den Anzeigeeffekt des ersten Anzeigebereichs so zu justieren, dass der Anzeigeeffekt des ersten Anzeigebereichs mit einem entsprechenden Anzeigeeffekt des zweiten Anzeigebereichs ohne Flecken übereinstimmt, und zwar folgendermaßen:
das Justierungsmodul (60) verwendet eine Vergleichsbeziehungstabelle zwischen Kapazitätswerten und Helligkeiten und justiert eine Helligkeit des ersten Anzeigebereichs zu einer ersten Helligkeit, wobei die erste Helligkeit mit einer zweiten Helligkeit des zweiten Anzeigebereichs ohne Flecken übereinstimmt.

11. Anzeigeschirm, der Folgendes umfasst:
eine Anzeigeeinheit (70), die dafür konfiguriert ist, Anzeigedaten anzuzeigen, die zu dem Anzeigeschirm übertragen wurden, wobei die Anzeigeeinheit (70) mindestens zwei Anzeigebereiche umfasst; und
eine Verwaltungsvorrichtung nach Anspruch 6, die mit der Anzeigeeinheit (70) verbunden ist.

## Revendications

1. Procédé de gestion d'un écran d'affichage qui comprend au moins deux zones d'affichage, comprenant :
la détection d'une première valeur de détérioration d'effet d'affichage d'une première zone d'affichage avec des taches sur la surface dans les au moins deux zones d'affichage (10), la première valeur de détérioration d'effet d'affichage indiquant le degré d'influence de taches sur la surface de la première zone d'affichage sur l'effet d'affichage de la première zone d'affichage ;
la comparaison de la première valeur de détérioration d'effet d'affichage à une valeur de seuil prédéterminée, et la délivrance d'un premier résultat de comparaison (20), dans lequel la valeur de seuil est utilisée pour juger s'il faut effectuer un ajustement d'effet d'affichage sur l'une quelconque des au moins deux zones d'affichage ; et
l'ajustement, sur la base de la première valeur de détérioration d'effet d'affichage détectée, de l'effet d'affichage de la première zone d'affichage avec des taches pour faire correspondre l'effet d'affichage de la première zone d'affichage à un effet d'affichage correspondant d'une deuxième zone d'affichage dans les au moins deux zones d'affichage (30) sans taches sur la surface, lorsque la première valeur de détérioration d'effet d'affichage est supérieure à la valeur de seuil ;
le procédé étant **caractérisé en ce que** l'écran d'affichage est un écran tactile et l'étape de la détection de la première valeur de détérioration d'effet d'affichage de la première zone d'affichage avec des taches sur la surface comprend :
la détection d'une première valeur de capacité de la première zone d'affichage dans les au moins deux zones d'affichage et l'utilisation d'une table de relations de comparaison entre des valeurs de capacité et des valeurs de détérioration d'effet d'affichage pour déterminer la première valeur de détérioration d'effet d'affichage correspondant à la première valeur de capacité détectée.

2. Procédé selon la revendication 1, dans lequel la valeur de seuil est déterminée par les étapes suivantes :
le recueil d'au moins une valeur de paramètre utilisée pour déterminer la valeur de seuil ; et
la détermination de la valeur de seuil sur la base de l'au moins une valeur de paramètre ;
dans lequel le paramètre comprend : un paramètre correspondant à des matériaux de lentille de l'écran tactile ; ou un paramètre correspondant à une performance de circuits ou de puces de commande tactile sélectionnés et utilisés par l'écran tactile ; ou un paramètre correspondant à une valeur empirique de taches d'empreintes digitales réelles obtenues par le recueil d'échantillons de taches d'empreintes digitales à grande échelle.

3. Procédé selon la revendication 2, dans lequel l'étape de la détection de la première valeur de détérioration d'effet d'affichage de la première zone d'affichage avec des taches dans les au moins deux zones d'affichage comprend :
lorsqu'un dispositif dans lequel est situé l'écran d'affichage est mis sous tension, la détection de la première valeur de détérioration d'effet d'affichage de la première zone d'affichage dans les au moins deux zones d'affichage ; ou
lorsqu'un dispositif dans lequel est situé l'écran d'affichage passe d'un état de fonctionnement à faible consommation d'énergie à un état de fonctionnement à forte consommation d'énergie, la détection de la première valeur de détérioration d'effet d'affichage de la première zone d'affichage dans les au moins deux zones d'affichage ; ou
dans le processus d'un dispositif dans lequel est situé l'écran d'affichage qui est dans un état de fonctionnement, la détection de la première valeur de détérioration d'effet d'affichage de la première zone d'affichage dans les au moins deux zones d'affichage à des périodes de temps régulières.

4. Procédé selon la revendication 1, dans lequel l'effet d'affichage est un contraste, et l'étape de l'ajustement d'un effet d'affichage de la première zone d'affichage pour faire correspondre l'effet d'affichage de la première zone d'affichage à un effet d'affichage correspondant d'une deuxième zone d'affichage sans taches comprend :
l'ajustement d'un contraste de la première zone d'affichage à un premier contraste en utilisant une table de relations de comparaison entre des valeurs de capacité et des contrastes, pour faire correspondre le premier contraste à un deuxième contraste de la deuxième zone d'affichage sans taches.

5. Procédé selon la revendication 1, dans lequel l'effet d'affichage est une luminosité, et l'étape de l'ajustement d'un effet d'affichage de la première zone d'affichage pour faire correspondre l'effet d'affichage de la première zone d'affichage à un effet d'affichage correspondant d'une deuxième zone d'affichage sans taches comprend :
l'ajustement d'une luminosité de la première zone d'affichage à une première luminosité en utilisant une table de relations de comparaison entre des valeurs de capacité et des luminosités, pour faire correspondre la première luminosité à une deuxième luminosité de la deuxième zone d'affichage sans tâches.

6. Appareil de gestion d'un écran d'affichage qui comprend au moins deux zones d'affichage, comprenant :
un module de détection (40) configuré pour effectuer la détection d'une première valeur de détérioration d'effet d'affichage d'une première zone d'affichage avec des taches sur la surface dans les au moins deux zones d'affichage, la première valeur de détérioration d'effet d'affichage indiquant le degré d'influence de taches sur la surface de la première zone d'affichage sur l'effet d'affichage de la première zone d'affichage ;
un module de comparaison (50) configuré pour effectuer la comparaison de la première valeur de détérioration d'effet d'affichage à une valeur de seuil prédéterminée, et la délivrance d'un premier résultat de comparaison, dans lequel la valeur de seuil est utilisée pour juger s'il faut effectuer un ajustement d'effet d'affichage sur l'une quelconque des au moins deux zones d'affichage ; et
un module d'ajustement (60) configuré pour effectuer l'ajustement, sur la base de la première valeur de détérioration d'effet d'affichage détectée, de l'effet d'affichage de la première zone d'affichage avec des taches pour faire correspondre l'effet d'affichage de la première zone d'affichage à un deuxième effet d'affichage correspondant d'une deuxième zone d'affichage dans les au moins deux zones d'affichage (30) sans taches sur la surface, lorsque la première valeur de détérioration d'effet d'affichage est supérieure à la valeur de seuil ;
**caractérisé en ce que** l'écran d'affichage est un écran tactile et le module de détection (40) comprend :
un module de détection de capacité configuré pour effectuer la détection d'une première valeur de capacité de la première zone d'affichage dans les au moins deux zones d'affichage ; et
un module de détermination de valeur de détérioration d'effet d'affichage configuré pour effectuer l'utilisation d'une table de relations de comparaison entre des valeurs de capacité et des valeurs de détérioration d'effet d'affichage pour déterminer la première valeur de détérioration d'effet d'affichage correspondant à la première valeur de capacité détectée.

7. Appareil selon la revendication 6, comprenant en outre :
un module de recueil configuré pour effectuer le recueil d'au moins une valeur de paramètre utilisée pour déterminer la valeur de seuil ; et
un module de détermination de valeur de seuil configuré pour effectuer la détermination de la valeur de seuil sur la base de l'au moins une valeur de paramètre ;
dans lequel le paramètre comprend : un paramètre correspondant à des matériaux de lentille de l'écran tactile ; ou un paramètre correspondant à une performance de circuits ou de puces de commande tactile sélectionnés et utilisés par l'écran tactile ; ou un paramètre correspondant à une valeur empirique de taches d'empreintes digitales réelles obtenues par le recueil d'échantillons de taches d'empreintes digitales à grande échelle.

8. Appareil selon la revendication 7, dans lequel le module de détection (40) est configuré pour effectuer la détection de la première valeur de détérioration d'effet d'affichage de la première zone d'affichage dans les au moins deux zones d'affichage lorsque les conditions suivantes sont remplies, et les conditions sont :
un dispositif dans lequel est situé l'écran d'affichage est mis sous tension ; ou
un dispositif dans lequel est situé l'écran d'affichage passe d'un état de fonctionnement à faible consommation d'énergie à un état de fonctionnement à forte consommation d'énergie ; ou
dans le processus d'un dispositif dans lequel est situé l'écran d'affichage qui est dans un état de fonctionnement, et une expiration d'une période de temps régulière.

9. Appareil selon la revendication 6, dans lequel l'effet d'affichage est un contraste, et le module d'ajustement (60) est configuré pour effectuer l'ajustement de l'effet d'affichage de la première zone d'affichage pour faire correspondre le premier effet d'affichage de la première zone d'affichage à un effet d'affichage correspondant de la deuxième zone d'affichage sans taches de la manière suivante :
le module d'ajustement (60) utilise une table de relations de comparaison entre des valeurs de capacités et des contrastes et ajuste un contraste de la première zone d'affichage à un premier contraste, dans lequel le premier contraste correspond à un deuxième contraste de la deuxième zone d'affichage sans taches.

10. Appareil selon la revendication 6, dans lequel l'effet d'affichage est une luminosité, et le module d'ajustement est configuré pour ajuster l'effet d'affichage de la première zone d'affichage pour faire correspondre le premier effet d'affichage de la première zone d'affichage à un effet d'affichage correspondant de la deuxième zone d'affichage sans taches de la manière suivante :
le module d'ajustement (60) utilise une table de relations de comparaison entre des valeurs de capacité et des luminosités et ajuste une luminosité de la première zone d'affichage à une première luminosité, dans lequel la première luminosité correspond à une deuxième luminosité de la deuxième zone d'affichage sans tâches.

11. Ecran d'affichage comprenant :
une unité d'affichage (70) configurée pour effectuer l'affichage de données d'affichage transmises à l'écran d'affichage, dans lequel l'unité d'affichage (70) comprend au moins deux zones d'affichage ; et
un appareil de gestion selon la revendication 6 raccordé à l'unité d'affichage (70).
